# EUROPÄISCHE PATENTSCHRIFT

(11) **EP 3 475 048 B1**
(45) Veröffentlichungstag und Bekanntmachung des Hinweises auf die Patenterteilung: **13.01.2021**
(21) Anmeldenummer: 17740624.6
(22) Anmeldetag: 22.06.2017
(51) Int. Cl.: B29C 45/14, B32B 3/26

(54) **VERFAHREN ZUR HERSTELLUNG EINES BAUELEMENTS UND BAUELEMENT**
METHOD FOR PRODUCING A COMPONENT AND COMPONENT
PROCÉDÉ DE FABRICATION D'UN ÉLÉMENT STRUCTURAL ET ÉLÉMENT STRUCTURAL

(30) Priorität: 22.06.2016 DE 102016111453
(43) Veröffentlichungstag der Anmeldung: 01.05.2019
(73) Patentinhaber: Plan B Engineering Solutions GmbH, 60596 Frankfurt am Main (DE)
(72) Erfinder: OENER, Serdar, 65462 Ginsheim-Gustavsburg (DE); KRETZSCHMAR, Kai, 63512 Hainburg (DE)
(74) Vertreter: Habermann Intellectual Property Partnerschaft von Patentanwälten mbB
(86) Internationale Anmeldenummer: PCT/EP2017/065427
(87) Internationale Veröffentlichungsnummer: WO 2017/220733

(56) Entgegenhaltungen:
- EP-A2- 2 292 709
- DE-A1- 4 120 133
- DE-A1-102010 043 948
- DE-A1-102012 210 485
- DE-A1-102015 008 645
- DE-T2- 68 901 858
- JP-A- 2011 146 350
- JP-A- 2012 192 605
- JP-A- 2012 250 509
- JP-A- 2014 213 491
- US-A1- 2003 116 886
- US-A1- 2008 003 401

## Beschreibung

Die Erfindung betrifft ein Verfahren zur Herstellung eines Bauelements aus einem FKV-Bauteil, bestehend aus einem Faserkunststoffverbundwerkstoff, und aus einem Kunststoff-Bauteil, bestehend aus einem ersten Kunststoff. Die Erfindung betrifft auch ein Bauelement aus einem FKV-Bauteil und einem Kunststoff-Bauteil.

Aus leichtbaugründen und um optisch und haptisch ansprechende Bauelemente zu schaffen, ist es beispielsweise im Karosseriebau bekannt, Karosserieelemente aus einem Faserkunststoffverbundwerkstoff zu verwenden. Diese Bauelemente müssen mit der Karosserie und insbesondere mit Kunststoff-Bauteilen verbunden werden. Zu diesem Zweck ist es bekannt, separat hergestellte Kunststoff-Bauteile zu verwenden, die Aufnahmebereiche für das aufzunehmende FKV-Bauteil aufweisen, in die ein seitlicher Abschnitt des FKV-Bauteils kraft- und/oder formschlüssig eingebracht werden kann. Das Kunststoffbauteil wird üblicherweise als Halterahmen ausgestaltet, über den das Karosserieelement mit der Karosserie verbunden werden kann.

Bei den bekannten Herstellungsverfahren zur Verbindung von FKV-Bauteilen mit Kunststoff-Bauteilen ist eine Verbindung ausschließlich in Randbereichen des FKV-Bauteils möglich, da die Aufnahmebereiche an dem FKV-Bauteil kraft- und/oder formschlüssig an einander gegenüberliegenden Seitenflächen des FKV-Bauteils anliegen, wobei Anlageabschnitte der Aufnahmebereiche über seitliche Verbindungsstege miteinander verbunden sind. Zudem ist es bei den bekannten Verfahren erforderlich, das FKV-Bauteil und das Kunststoff-Bauteil separat herzustellen und in einem gesonderten Herstellungsschritt - häufig manuell - miteinander zu verbinden. Dokument DE102012210485A1 offenbart ein Verfahren zur Herstellung eines Bauelements aus einem FKV-Bauteil aus einem Faserkunststoffverbundwerkstoff und aus einem weiteren Bauteil, wobei in einem FKV-Verarbeitungsschritt das FKV-Bauteil aus dem Faserkunststoffverbundwerkstoff hergestellt wird, wobei in einen Verbindungsbereich des FKV-Bauteils mindestens eine Ausnehmung eingebracht wird, wobei sich die Ausnehmung in einer Bauteilrichtung vollständig durch das FKV-Bauteil erstreckt, wobei die Ausnehmung längs eines Umfangs der Ausnehmungen vollständig von dem Faserkunststoffverbundwerkstoff umschlossen ist, wobei in einem Verbindungsschritt ein Verbindungskunststoffteil aus einem zweiten Kunststoff in dem Verbindungsbereich angeordnet wird das einen Stegabschnitt, der die Ausnehmung ausfüllend ausgebildet ist, und genau einen Anlageabschnitt auf einer Seite des FKV-Bauteils aufweist, wobei der Stegabschnitt innerhalb der Ausnehmung eine einen Formschluss bildende Struktur bildet, und wobei in einem auf den Verbindungsschritt folgenden Schritt das weitere Bauteil an dem Anlageabschnitt angeordnet wird.

Als Aufgabe der Erfindung wird es angesehen, ein Herstellungsverfahren für ein Bauelement aus einem FKV-Bauteil und einem Kunststoff-Bauteil bereitzustellen, das eine Verbindung der Bauteile auch beabstandet zu Randbereichen des FKV-Bauteils erlaubt und das einfach und kostengünstig ausgeführt werden kann.

Diese Aufgabe wird erfindungsgemäß durch ein Verfahren zur Herstellung eines Bauelements aus einem FKV-Bauteil aus einem Faserkunststoffverbundwerkstoff und aus einem Kunststoff-Bauteil aus einem ersten Kunststoff gelöst, wobei in einem FKV-Verarbeitungsschritt das FKV-Bauteil aus dem Faserkunststoffverbundwerkstoff hergestellt wird, wobei in einen Verbindungsbereich des FKV-Bauteils mindestens eine Ausnehmung eingebracht wird, wobei sich die Ausnehmung in einer Bauteilrichtung vollständig durch das FKV-Bauteil erstreckt, wobei die Ausnehmung längs eines Umfangs der Ausnehmungen vollständig von dem Faserkunststoffverbundwerkstoff umschlossen ist, wobei in einem Verbindungsschritt ein Verbindungskunststoffteil aus einem zweiten Kunststoff in dem Verbindungsbereich angeordnet wird, sodass Anlageabschnitte des Verbindungskunststoffteils an einander gegenüberliegenden Seitenflächen des FKV-Bauteils anliegen, wobei die Anlageabschnitte über mindestens einen und sich durch die mindestens eine Ausnehmung erstreckenden Stegabschnitt miteinander verbunden sind, und wobei in einem Kunststoff-Verarbeitungsschritt das Kunststoff-Bauteil an mindestens einem Anlageabschnitt angeordnet wird. Die Ausnehmung kann in Abhängigkeit der Form des FKV-Bauteils in unterschiedlichen Bereich des FKV-Bauelements und insbesondere beabstandet zu Randbereichen des FKV-Bauteils angeordnet werden, da eine Verbindung der Anlageabschnitte über einen seitlichen Verbindungsabschnitt nicht erforderlich ist. Vielmehr erfolgt eine formschlüssige Verbindung des Verbindungskunststoffteils mit dem FKV-Bauteil über die Anlageabschnitte und den sich durch die Ausnehmung erstreckenden Stegabschnitt.

Die Anlageabschnitte sind vorteilhafterweise flach und eben ausgestaltet, um eine optische Beeinträchtigung einer Oberfläche des FKV-Bauteils zu vermeiden. Erfindungsgemäß weisen die Anlageabschnitte eine Dicke von weniger als 2mm, vorteilhafterweise eine Dicke von weniger als 1,5mm und besonders vorteilhafterweise eine Dicke von weniger als 1mm auf. Erfindungsgemäß kann die Dicke der Anlageabschnitte auch weniger als 0,5mm betragen. Eine Ausdehnung der Anlageabschnitte quer zur Dicke der Anlageabschnitte ist vorteilhafterweise so ausgestaltet, dass eine ausreichende aber möglichst geringe Anlagefläche mit dem FKV-Bauteil erreicht und gleichzeitig eine ausreichende Verbindungsfläche mit dem Kunststoff-Bauteil geschaffen wird. Vorteilhafterweise ist die Ausdehnung von Anlageabschnitten, die nicht mit dem Kunststoff-Bauteil verbunden werden, möglichst klein ausgestaltet, um eine optische Beeinträchtigung des FKV-Bauteils zu vermeiden.

Um eine drehsichere Verbindung des Verbindungskunststoffteils und des FKV-Bauteils zu erreichen, ist erfindungsgemäß vorgesehen, dass mindestens zwei Ausnehmungen in das FKV-Bauteil eingebracht werden. Auf diese Weise kann einfach erreicht werden, dass bei einem auf das Verbindungskunststoffteil wirkenden Drehmoment ein Verdrehen des Verbindungskunststoffteils vermieden wird.

Erfindungsgemäß ist vorteilhafterweise vorgesehen, dass die Ausnehmung in dem FKV-Verarbeitungsschritt bei der Herstellung des FKV-Bauteils in das FKV-Bauteil eingebracht wird. Das FKV-Bauteil kann durch aus dem Stand der Technik bekannten Verfahren aus unterschiedlichen Halbzeugen hergestellt werden. Hierbei können die Ausnehmungen beispielsweise durch entsprechende Formelemente, um die der Faserkunststoffverbundwerkstoff herum angeordnet wird, in dem FKV-Verarbeitungsschritt bei der Herstellung des FKV-Bauteils in das FKV-Bauteil eingebracht werden.

Es ist aber auch möglich und erfindungsgemäß vorgesehen, dass die Ausnehmung in einem auf den FKV-Verarbeitungsschritt folgenden Bearbeitungsschritt in das FKV-Bauteil eingebracht wird. Die Ausnehmung bzw. die Ausnehmungen können in dem Bearbeitungsschritt erfindungsgemäß durch Bohren, Stanzen oder formteilgebendes Schneiden in das FKV-Bauteil eingebracht werden.

Vorteilhafterweise weisen die Ausnehmungen eine Querschnittsfläche von weniger als 12mm², vorteilhafterweise eine Querschnittsfläche von weniger als 7mm² und besonders vorteilhafterweise eine Querschnittsfläche von weniger als 4mm² auf. Erfindungsgemäß kann die Querschnittsfläche der Ausnehmungen auch weniger als 0,8mm² betragen.

Bei dem ersten Kunststoff und/oder dem zweiten Kunststoff kann es sich erfindungsgemäß um eine Weichkomponente oder eine Hartkomponente handeln. Beispielsweise kann es sich bei der Hartkomponente um einen thermoplastischen amorphen oder teilkristallinen Kunststoff und bei der Weichkomponente um einen thermoplastischen Elastomer handeln.

Vorteilhafterweise ist erfindungsgemäß vorgesehen, dass das Verbindungskunststoffteil durch Gießen hergestellt wird. Das Verbindungskunststoffteil wird vorteilhafterweise durch ein Spritzgussverfahren hergestellt.

Erfindungsgemäß ist vorteilhafterweise vorgesehen, dass das Kunststoff-Bauteil an den Anlageabschnitt durch ein Spritzgussverfahren angespritzt wird. Beim Spritzgussverfahren können Verbindungskunststoffteile und Kunststoff-Bauteile aus unterschiedlichen Kunststoffen miteinander verbunden werden. Die Verbindungskunststoffteile und die Kunststoff-Bauteile können im Spritzgussverfahren vorteilhafterweise auch mit einer Spritzgussmaschine hergestellt werden. Zu diesem Zweck können Transfer-, Dreh- und Schiebertechnik-Werkzeuge eingesetzt werden. Vorteilhafterweise wird eine mit einem Drehteller ausgerüstete Spritzgussmaschine zur Herstellung der Verbindungskunststoffteile und der Kunststoff-Bauteile verwendet. Durch die unmittelbar aufeinanderfolgende Herstellung des Verbindungskunststoffteils und des Kunststoff-Bauteils auf einer Spritzgussmaschine ist eine besonders schnelle und kostengünstige Herstellung des Bauelements möglich.

Es ist aber auch möglich und erfindungsgemäß vorgesehen, dass das Kunststoff-Bauteil durch Extrudieren, Schäumen, Pressen oder Reaktionskleben hergestellt und mit dem Verbindungskunststoffteil verbunden wird.

Vorteilhafterweise ist erfindungsgemäß vorgesehen, dass mehrere Verbindungskunststoffteile in zueinander beabstandeten Verbindungsbereichen an dem FKV-Bauteil angeordnet werden. Auf diese Weise kann eine bessere und besonders stabile Verbindung zwischen dem FKV-Bauteil und dem Kunststoff-Bauteil hergestellt werden, da die zwischen dem FKV-Bauteil und dem Kunststoff-Bauteil zu übertragenden Kräfte über mehrere Verbindungskunststoffteile übertragen werden.

Vorteilhafterweise ist erfindungsgemäß vorgesehen, dass es sich bei dem ersten Kunststoff und dem zweiten Kunststoff um das gleiche Kunststoffmaterial handelt. Es ist aber auch möglich und vorteilhafterweise vorgesehen, dass unterschiedliche Kunststoffe als erster und zweiter Kunststoff verwendet werden.

Eine besonders hochwertig anmutende Oberfläche des Bauelements kann erfindungsgemäß dadurch erreicht werden, dass der Faserkunststoffverbundwerkstoff ein glasfaserverstärkter oder eine carbonfaserverstärkter Kunststoff ist.

Um die Stabilität der Verbindung über das Verbindungskunststoffteil weiter zu erhöhen, ist erfindungsgemäß vorgesehen, dass die Anlageabschnitte zusätzlich durch einen an einer Seitenfläche des FKV-Bauteils anliegenden Verbindungsabschnitt miteinander verbunden sind. Allerdings wird hierdurch eine Verwendung des erfindungsgemäßen Verbindungskunststoffteils auf Randbereiche des FKV-Bauteils beschränkt.

Die eingangs genannte Aufgabe wird auch durch ein nicht separat beanspruchtes Bauelement aus einem FKV-Bauteil aus einem Faserkunststoffverbundwerkstoff und aus einem Kunststoff-Bauteil aus einem ersten Kunststoff gelöst, wobei das FKV-Bauteil in einem Verbindungsbereich des FKV-Bauteils mindestens eine Ausnehmung aufweist, wobei sich die Ausnehmung in einer Bauteilrichtung vollständig durch das FKV-Bauteil erstreckt, wobei die Ausnehmung längs eines Umfangs der Ausnehmungen vollständig von dem Faserkunststoffverbundwerkstoff umschlossen ist, wobei in Verbindungskunststoffteil aus einem zweiten Kunststoff in dem Verbindungsbereich angeordnet ist, sodass Anlageabschnitte des Verbindungskunststoffteils an einander gegenüberliegenden Seitenflächen des FKV-Bauteils anliegen, wobei die Anlageabschnitte über mindestens einen und sich durch die mindestens eine Ausnehmung erstreckenden Stegabschnitt miteinander verbunden sind, und wobei das Kunststoff-Bauteil an mindestens einem Anlageabschnitt angeordnet ist. Das Bauelement kann erfindungsgemäß die bereits im Zusammenhang mit dem Herstellungsverfahren beschriebenen Komponenten und Elemente unabhängig voneinander aufweisen. Im Hinblick auf die verschiedenen Ausgestaltungen wird daher auf die voranstehenden Erläuterungen verwiesen. Das Bauelement kann vorteilhafterweise besonders einfach und kostengünstig durch das voranstehend beschriebene Verfahren hergestellt werden.

Weitere vorteilhafte Ausgestaltungen des erfindungsgemäßen Verfahrens und des erfindungsgemäßen Bauelements werden anhand von in der Zeichnung dargestellten Ausführungsbeispielen näher erläutert.

Es zeigt:
Figur 1 und 2 schematische Darstellungen des erfindungsgemäßen Verfahrens und
Figur 3 eine Schnittzeichnung eines Bauelements, das nach dem erfindungsgemäßen Verfahren hergestellt wurde.

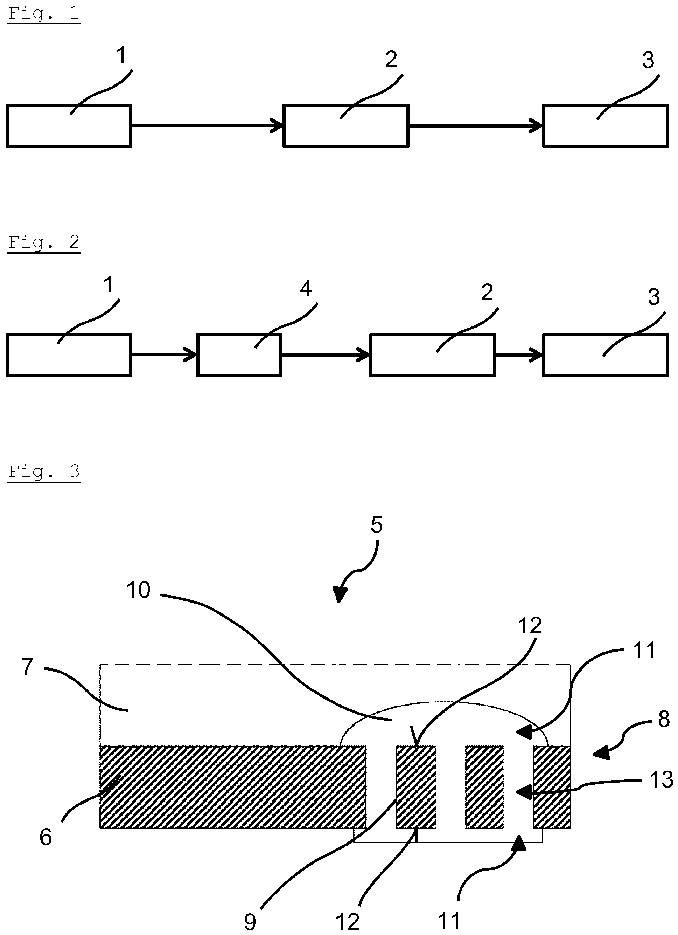

In Figur 1 und Figur 2 sind verschiedene Ausführungsvarianten des erfindungsgemäßen Verfahrens dargestellt. In einem FKV-Verarbeitungsschritt 1 wird ein FKV-Bauteil aus einem Faserkunststoffverbundwerkstoff hergestellt und es wird in einem Verbindungsbereich mindestens eine Ausnehmung in das FKV-Bauteil eingebracht. In dem Verbindungsbereich wird in einem Verbindungsschritt 2 ein Verbindungskunststoffteil angeordnet, so dass Anlageabschnitte des Verbindungskunststoffteils an einander gegenüberliegenden Seitenflächen des FKV-Bauteils anliegen. In einem Kunststoff-Verarbeitungsschritt 3 wird ein Kunststoff-Bauteil an mindestens einem der Anlageabschnitte angeordnet.

Bei dem in Figur 1 dargestellten Verfahren wird die mindestens eine Ausnehmung in dem FKV-Verarbeitungsschritt 1 eingebracht. Dies kann erfindungsgemäß beispielsweise durch Verwendung eines geeigneten Einlageelements in eine Form zur Herstellung des FKV-Bauteils erfolgen. Dagegen wird bei der in Figur 2 dargestellten Ausführungsvariante die mindestens eine Ausnehmung in einem auf den FKV-Verarbeitungsschritt 1 folgenden Bearbeitungsschritt 4 nachträglich in das bereits hergestellte FKV-Bauteil beispielsweise durch Schneiden eingebracht.

In Figur 3 ist eine Schnittzeichnung eines Bauelements 5, das nach dem erfindungsgemäßen Verfahren hergestellt wurde schematisch dargestellt. Das Bauelement 5 umfasst ein FKV-Bauteil 6 und ein Kunststoff-Bauteil 7. Das FKV-Bauteil 6 weist in einem Verbindungsbereich 8 des FKV-Bauteils 6 drei Ausnehmung 9 auf. In der Figur 3 ist exemplarisch eine Ausnehmung 9 mit einem Bezugszeichen gekennzeichnet. Die Ausnehmungen 9 erstrecken sich vollständig durch das FKV-Bauteil 6 und sind vollständig von dem Faserkunststoffverbundwerkstoff des FKV-Bauteils 6 umschlossen. In dem Verbindungsbereich 8 ist ein Verbindungskunststoffteil 10 so angeordnet, dass Anlageabschnitte 11 des Verbindungskunststoffteils 10 an einander gegenüberliegenden Seitenflächen 12 des FKV-Bauteils 6 anliegen. Die Anlageabschnitte 11 sind über Stegabschnitte 13 miteinander verbunden, die sich durch die Ausnehmungen 9 erstrecken. In der Zeichnung ist ein Stegabschnitt 13 exemplarisch mit einem Bezugszeichen gekennzeichnet.

Das Kunststoff-Bauteil 7 ist an einem der Anlageabschnitte 11 angeordnet. Bei dem dargestellten erfindungsgemäßen Bauelement 5 kann das Verbindungskunststoffteil 10 und das Kunststoff-Bauteil 7 vorteilhafterweise in einem 2-stufige Spritzgussverfahren hergestellt sein. Zu diesem Zweck kann vorteilhafterweise eine Spritzgussmaschine mit einem Drehteller verwendet werden, wobei zunächst das Verbindungskunststoffteil 10 an das FKV-Bauteil 6 angespritzt, anschließend der Drehteller verdreht und das Kunststoff-Bauteil 7 an das Verbindungskunststoffteil 10 angespritzt wird. Beim Anspritzen des Verbindungskunststoffteils 10 an das FKV-Bauteil 7 strömt der zweite Kunststoff zur Herstellung des Verbindungskunststoffteils 10 durch die Ausnehmungen 9 hindurch. Auf diese Weise werden die Stegabschnitte 13 gebildet.

## Patentansprüche

1. Verfahren zur Herstellung eines Bauelements (5) aus einem FKV-Bauteil (6) aus einem
Faserkunststoffverbundwerkstoff und aus einem Kunststoff-Bauteil (7) aus einem ersten Kunststoff, wobei in einem FKV-Verarbeitungsschritt (1) das FKV-Bauteil (6) aus dem Faserkunststoffverbundwerkstoff hergestellt wird, wobei in einen Verbindungsbereich (8) des FKV-Bauteils (6) mindestens eine Ausnehmung (9) eingebracht wird, wobei sich die Ausnehmung (9) in einer Bauteilrichtung vollständig durch das FKV-Bauteil (6) erstreckt, wobei die Ausnehmung (9) längs eines Umfangs der Ausnehmungen (9) vollständig von dem Faserkunststoffverbundwerkstoff umschlossen ist, wobei in einem Verbindungsschritt (2) ein Verbindungskunststoffteil (10) aus einem zweiten Kunststoff in dem Verbindungsbereich (8) angeordnet wird, sodass Anlageabschnitte (11) des Verbindungskunststoffteils (10) an einander gegenüberliegenden Seitenflächen (12) des FKV-Bauteils (6) anliegen, wobei die Anlageabschnitte (11) über mindestens einen sich durch die mindestens eine Ausnehmung (9) erstreckenden Stegabschnitt (13) miteinander verbunden sind, und wobei in einem auf den Verbindungsschritt (2) folgenden Kunststoff-Verarbeitungsschritt (3) das Kunststoff-Bauteil (7) an mindestens einem der Anlageabschnitte (11) angeordnet wird.

2. Verfahren gemäß Anspruch 1, **dadurch gekennzeichnet, dass** mindestens zwei Ausnehmungen (9) in das FKV-Bauteil (6) eingebracht werden.

3. Verfahren gemäß Anspruch 1 oder Anspruch 2, **dadurch gekennzeichnet, dass** die Ausnehmung (9) in dem FKV-Verarbeitungsschritt (1) bei der Herstellung des FKV-Bauteils (6) in das FKV-Bauteil (6) eingebracht wird.

4. Verfahren gemäß Anspruch 1 oder Anspruch 2, **dadurch gekennzeichnet, dass** die Ausnehmung (9) in einem auf den FKV-Verarbeitungsschritt (1) folgenden Bearbeitungsschritt (4) in das FKV-Bauteil (6) eingebracht wird.

5. Verfahren gemäß einem der voranstehenden Ansprüche, **dadurch gekennzeichnet, dass** das Verbindungskunststoffteil durch Gießen hergestellt wird.

6. Verfahren gemäß einem der voranstehenden Ansprüche, **dadurch gekennzeichnet, dass** das Kunststoff-Bauteil (7) an den Anlageabschnitt (11) durch ein Spritzgussverfahren angespritzt wird.

7. Verfahren gemäß einem der voranstehenden Ansprüche, **dadurch gekennzeichnet, dass** es sich bei dem ersten Kunststoff und dem zweiten Kunststoff um das gleiche Kunststoffmaterial handelt.

8. Verfahren gemäß einem der voranstehenden Ansprüche, **dadurch gekennzeichnet, dass** der Faserkunststoffverbundwerkstoff ein glasfaserverstärkter oder eine carbonfaserverstärkter Kunststoff ist.

9. Verfahren gemäß einem der voranstehenden Ansprüche, **dadurch gekennzeichnet, dass** die Anlageabschnitte (11) zusätzlich durch einen an einer Seitenfläche des FKV-Bauteils (6) anliegenden Verbindungsabschnitt miteinander verbunden sind.

## Claims

1. A method for producing a component (5) from an FRP part (6) made of a fibre-reinforced plastic composite material and from a plastics part (7) made of a first plastic, wherein in an FRP processing step (1) the FRP part (6) is produced from the fibre-reinforced plastic composite material, wherein at least one recess (9) is introduced into a connection region (8) of the FRP part (6), wherein the recess (9) extends completely through the FRP part (6) in a direction of the part, wherein the recess (9) is completely surrounded by the fibre-reinforced plastic composite material along a perimeter of the recesses (9), wherein in a connecting step (2) a connecting plastics piece (10) made of a second plastic is arranged in the connection region (8) such that contact portions (11) of the connecting plastics piece (10) abut on mutually opposite side surfaces (12) of the FRP part (6), wherein the contact portions (11) are connected together via at least one web portion (13) extending through the at least one recess (9), and wherein in a plastics processing step (3) following the connecting step (2) the plastics part (7) is arranged on at least one contact portion (11).

2. The method according to claim 1, **characterised in that** at least two recesses (9) are introduced into the FRP part (6).

3. The method according to claim 1 or claim 2, **characterised in that** the recess (9) is introduced into the FRP part (6) during the production of the FRP part (6) in the FRP processing step (1).

4. The method according to claim 1 or claim 2, **characterised in that** the recess (9) is introduced into the FRP part (6) in a machining step (4) following the FRP processing step (1).

5. The method according to one of the preceding claims, **characterised in that** the connecting plastics piece is produced by casting.

6. The method according to one of the preceding claims, **characterised in that** the plastics part (7) is moulded on to the contact portion (11) by an injection moulding method.

7. The method according to one of the preceding claims, **characterised in that** the first plastic and the second plastic are the same plastics material.

8. The method according to one of the preceding claims, **characterised in that** the fibre-reinforced plastic composite material is a glass-fibre-reinforced plastic or a carbon-fibre-reinforced plastic.

9. The method according to one of the preceding claims, **characterised in that** the contact portions (11) are additionally connected to each other by a connecting portion abutting a side surface of the FRP part (6).

## Revendications

1. Procédé de fabrication d'un composant (5) à partir d'une pièce structurale en FRP (6) en matière plastique renforcée de fibres et d'une pièce structurale en matière plastique (7) en une première matière plastique, la pièce structurale en FRP (6) étant fabriquée à partir de la matière plastique renforcée de fibres dans une étape de transformation de FRP (1), au moins un évidement (9) étant introduit dans une zone de liaison (8) de la pièce structurale en FRP (6), l'évidement (9) s'étendant entièrement à travers la pièce structurale en FRP (6) dans une direction de la pièce structurale, l'évidement (9) étant entièrement entouré par la matière plastique renforcée de fibres le long d'une périphérie des évidements (9), une pièce de liaison en matière plastique (10) en une seconde matière plastique étant disposée dans la zone de liaison (8) dans une seconde étape de liaison (2), de telle sorte que des parties d'appui (11) de la pièce de liaison en matière plastique (10) s'appuient contre des surfaces latérales (12) opposées l'une à l'autre de la pièce structurale en FRP (6), les parties d'appui (11) étant reliées entre elles par le biais d'au moins une partie formant pont (13) s'étendant à travers l'au moins un évidement (9), et la pièce structurale en matière plastique (7) étant disposée sur au moins une des parties d'appui (11) dans une étape de transformation de matière plastique (3) suivant l'étape de liaison (2).

2. Procédé selon la revendication 1, **caractérisé en ce qu'**au moins deux évidements (9) sont introduits dans la pièce structurale en FRP (6).

3. Procédé selon la revendication 1 ou la revendication 2, **caractérisé en ce que** l'évidement (9) est introduit dans la pièce structurale en FRP (6), lors de la fabrication de la pièce structurale en FRP (6), dans l'étape de transformation de FRP (1).

4. Procédé selon la revendication 1 ou la revendication 2, **caractérisé en ce que** l'évidement (9) est introduit dans la pièce structurale en FRP (6) dans une étape de façonnage (4) suivant l'étape de transformation de FRP (1).

5. Procédé selon l'une des revendications précédentes, **caractérisé en ce que** la pièce de liaison en matière plastique est fabriquée par moulage par coulée.

6. Procédé selon l'une des revendications précédentes, **caractérisé en ce que** la pièce structurale en matière plastique (7) est surmoulé à la partie d'appui (11) par un procédé de moulage par injection.

7. Procédé selon l'une des revendications précédentes, **caractérisé en ce que** la première matière plastique et la seconde matière plastique sont la même matière plastique.

8. Procédé selon l'une des revendications précédentes, **caractérisé en ce que** la matière plastique renforcée de fibres est une matière plastique renforcée de fibres de verre ou renforcée de fibres de carbone.

9. Procédé selon l'une des revendications précédentes, **caractérisé en ce que** les parties d'appui (11) sont reliées entre elles en outre par une partie de liaison s'appuyant contre une surface latérale de la pièce structurale en FRP (6) .
